# EUROPÄISCHE PATENTSCHRIFT

(11) **EP 0 831 969 B1**
(45) Veröffentlichungstag und Bekanntmachung des Hinweises auf die Patenterteilung: **01.09.1999**
(21) Anmeldenummer: 96919776.3
(22) Anmeldetag: 15.05.1996
(51) Int. Cl.: B01J 35/04, F01N 3/28

(54) **VORRICHTUNG UND VERFAHREN ZUM HERSTELLEN EINES WABENKÖRPERS, INSBESONDERE EINES KATALYSATOR-TRÄGERKÖRPERS**
METHOD AND DEVICE FOR PRODUCING A HONEYCOMBED BODY, IN PARTICULAR A CATALYST-SUPPORT BODY
PROCEDE ET DISPOSITIF PERMETTANT DE PRODUIRE UN CORPS ALVEOLE, NOTAMMENT UN ELEMENT SUPPORT DE CATALYSEUR

(30) Priorität: 14.06.1995 DE 19521685
(43) Veröffentlichungstag der Anmeldung: 01.04.1998
(73) Patentinhaber: Emitec Gesellschaft für Emissionstechnologie mbH, 53797 Lohmar (DE)
(72) Erfinder: WIERES, Ludwig, D-51491 Overath (DE)
(74) Vertreter: Kahlhöfer, Hermann, Dipl.-Phys.
(86) Internationale Anmeldenummer: EP9602094
(87) Internationale Veröffentlichungsnummer: WO9700135

(56) Entgegenhaltungen:
- EP-A- 0 322 566
- EP-A- 0 569 109
- WO-A-90/03220
- WO-A-94/01661

## Beschreibung

Die vorliegende Erfindung bezieht sich auf eine Vorrichtung und ein Verfahren zum Herstellen eines Wabenkörpers mit einer Vielzahl von für ein Fluid durchlässigen Kanälen, insbesondere eines Katalysator-Trägerkörpers.

Zur Vermeidung von Schadstoffen, insbesondere in Kraftfahrzeugabgasen werden Katalysator-Trägerkörper verwendet. Bei solchen Katalysator-Trägerkörpern kann es sich um metallische Wabenkörper handeln. Der Wabenkörper umfaßt einen Stapel aus einer Vielzahl von zumindest teilweise strukturierten Blechen. Der Stapel ist gegensinnig um sich selbst und um einen Zentralbereich verschlungen. Eine solche Ausführung eines Wabenkörpers ist z. B. durch das Patent US 4 923 109 bekannt.

Durch die WO 90/03220 ist ein metallischer Katalysator-Trägerkörper für Kraftfahrzeuge bekannt, der aus zumindest teilweise strukturierten Blechen aufgebaut ist. Dieser Katalysator-Trägerkörper umfaßt mindestens drei Stapel von Blechen, wobei mindestens drei der Stapel um je eine zugehörige Knicklinie im Zentralbereich des Wabenkörpers gefaltet und im gefalteten Zustand gleichsinnig umeinander und um den Zentralbereich mit den Knicklinien verschlungen sind.

Zur Herstellung solcher Katalysator-Trägerkörper sind Vorrichtungen bekannt, die eine um eine Achse verdrehbare, an jedem Stapel angreifende gabelförmige Umschlingungseinrichtung und sich zu einer Form schließende Formsegmente umfaßt. Die Innenkontur der verschlossenen Form entspricht der Außenkontur des Wabenkörpers im umschlungenen Zustand. Die häufigste Form, in der die Wabenkörper ausgebildet werden, ist zylinderförmig. Um ein Umschlingen der Stapel um sich selbst und um einen Zentralbereich zu gewährleisten, werden die Formsegmente so zum Stapel hin bewegt, daß während der Drehung der gabelförmigen Verschlingungseinrichtung der Stapel bzw. die Stapel am Rand der Formsegmente anliegen und dieser Rand ein Widerlager bildet. Gegen Ende des Herstellungsvorganges wird die Form vollständig verschlossen und so dem Wabenkörper seine endgültige Form verliehen.

Die bekannten Vorrichtungen weisen zwei Formsegmente auf, die geradlinig aufeinanderzu und voneinanderweg bewegbar sind. Während des Schließvorganges besteht die Gefahr, daß wenigstens ein Formsegment sich gegen die Bewegungsrichtung des noch zu verschlingenden Abschnitts eines Stapels bewegt. Gelangt das Formsegment gegen den Abschnitt, so kann es zu einer unerwünschten Deformation des Stapels bzw. der Stapel kommen. Die Deformation führt dazu, daß einzelne Bleche teilweise verbogen werden. Hierdurch bedingt wird die Struktur des fertigen Wabenkörpers beeinträchtigt. Zum einen leidet die Festigkeit des Wabenkörpers und zum anderen kommt es zu einer lokalen Veränderung der Kanalquerschnitte.

Hiervon ausgehend liegt der vorliegenden Erfindung die Aufgabe zugrunde, die bekannte Vorrichtung zur Herstellung eines Wabenkörpers so weiterzubilden, daß während des Herstellungsprozesses die Gefahr der Deformation von Stapeln bzw. einzelnen Blechen nicht auftritt. Ferner soll ein Verfahren zur Herstellung eines Wabenkörpers angegeben werden, durch welches eine Deformation einzelner Stapel vermieden wird.

Erfindungsgemäß wird diese Aufgabe durch eine Vorrichtung mit den Merkmalen nach Anspruch 1 gelöst. Vorteilhafte Weitergestaltungen der Vorrichtung sind Gegenstand der Unteransprüche 2 bis 18 Erfindungsgemäße Verfahren zur Herstellung eines Wabenkörpers sind in den Ansprüchen 19 und 20 enthalten. Eine vorteilhafte Weiterentwicklung des Verfahren ist Gegenstand des Unteranspruchs 21.

Die erfindungsgemäße Vorrichtung zum Herstellen eines Wabenkörpers aus wenigstens einem Stapel aus einer Vielzahl von zumindest teilweise strukturiertem Blech, welche eine Vielzahl von für ein Fluid durchlässigen Kanälen bilden, weist eine Form auf, die wenigstens zwei Formsegmente aufweist. Ein jedes Formsegment ist jeweils um eine Schwenkachse, die jeweils parallel zur Achse der Umschlingungseinrichtung verläuft, gegen den Drehsinn der Umschlingungseinrichtung verschwenkbar. Durch das Verschwenken eines jeden Formsegments gegen den Drehsinn der Umschlingungseinrichtung wird verhindert, daß ein oder mehrere Blechstapel beim Schließen der Form gestaucht wird bzw. werden. Vorzugsweise weist die Vorrichtung bei mehr als zwei Stapeln eine der Anzahl der Stapel entsprechende Anzahl von Formsegmenten auf, welche gegen den Drehsinn der Umschlingungseinrichtung verschwenkbar sind. Die Schwenkachsen der Formsegmente sind vorzugsweise äquidistant zueinander auf einer den fertigen Wabenkörper umhüllenden angeordnet.

Bedingt durch die Konstruktion der bekannten Vorrichtung zum Herstellen eines Wabenkörpers werden die Bleche des Stapels eines Wabenkörpers stark beansprucht. Die Beanspruchung der Bleche ergibt sich unter anderem daraus, daß das Widerlager mit Abstand zum Krafteinleitungszentrum angeordnet ist. Das System Widerlager, Blechstapel und Krafteinleitungszentrum ist vergleichbar einer einseitig eingespannten geschichteten Blattfeder. Wie auch bei einer solch geschichteten Blattfeder, treten zwischen den einzelnen Lagen eines Stapels Reibungen auf. Diese Reibungen bedingen beim Wickeln einen erhöhten Energieeinsatz. Desweiteren wird der noch nicht umschlungene Abschnitt eines jeden Stapels verbogen, wodurch eine Walkarbeit des Stapels bedingt ist.

Die Vorrichtungen und vorteilhaften Weiterbildungen der Verfahren gehen von dem Grundgedanken aus, daß die Herstellbarkeit eines Wabenkörpers mit einer Vielzahl von für ein Fluid durchlässigen Kanälen, insbesondere eines Katalysator-Trägerkörpers, günstiger ist, wenn das Widerlager unmittelbar an dem bzw. an den umschlungenen Stapel bzw. Stapeln anliegt. Der noch nicht umschlungene Abschnitt eines jeden Stapels ist frei. Es entstehen daher, wie dies nach dem Stand der Technik der Fall ist, keine Beanspruchungen des noch nicht umschlungenen Abschnitts des Stapels. Es kommt daher nicht zu einer Biegebeanspruchung des noch nicht umschlungenen Abschnittes des Stapels.

Dieser Grundgedanke wird gemäß Anspruch 5 in einer Vorrichtung zum Herstellen eines Wabenkörpers mit einer Vielzahl von für ein Fluid durchlässigen Kanälen, insbesondere eines Katalysators, der einen Stapel aus einer Vielzahl von zumindest teilweise strukturierten Blechen umfaßt, die eine um eine Achse verdrehbare, am Stapel angreifende gabelförmige Umschlingungseinrichtung und sich zu einer formschließende Formsegmente aufweist, wobei die Schwenkachse an einem jeweils ein Widerlager bildenden Ende des Formsegmentes angeordnet ist, und jedes Widerlager zur Achse hin und von dieser weg verschieblich ist, verwirklicht. Bei dieser Vorrichtung liegt das Widerlager stets während des Umeinanderschlingens an dem Stapel an. Während des Umschlingungsvorganges vergrößert sich die radiale Erstreckung des bereits umschlungenen Stapels. Um diesem Vorgang Rechnung zu tragen, ist das Widerlager zur Achse der Umschlingungseinrichtung hin und von dieser weg verschieblich. Das Widerlager kann mit einer definiten Anpresskraft an dem Stapel anliegen.

Ist der Wabenkörper aus wenigstens drei Stapeln aus einer Vielzahl von zumindest teilweise strukturierten Blechen gebildet, und die Stapel gleichsinnig umeinander verschlungen sind, so wird eine Vorrichtung vorgeschlagen, bei der die Anzahl der Formsegmente der Form der Anzahl der Stapel entspricht. Jedes Formsegment ist um eine Schwenkachse, die jeweils parallel zur Achse verläuft, und an eine jeweils ein Widerlager bildendem Ende angeordnet. Die Formsegmente sind gegen den Drehsinn der Umschlingungseinrichtung verschwenkbar. Jedes Widerlager ist zur Achse der Umschlingungseinrichtung hin und von dieser weg verschieblich. Mittels einer solchen Vorrichtung ist ein in der WO 90/03220 beschriebene Wabenkörper herstellbar.

Gemäß einem weiteren vorteilhaften Gedanken wird eine Weiterbildung der Vorrichtung vorgeschlagen, die eine Grundplatte mit sich radial zum Zentrum erstreckenden Führungsnuten aufweist. In jeder Führungsnut ist ein eine Schwenkachse bildender Bolzen gleitend geführt. Jede Führungsnut weist einen polygonalen Querschnitt auf. Bevorzugt wird eine Ausführung der Führungsnut, die einen T-förmigen oder schwalbenschwanzförmigen Querschnitt aufweist. Der Bolzen weist einen entsprechenden Kopf auf, welcher in die Führungsnut eingreift. Es ist nicht zwingend, daß die Führungsnuten in einer einstückigen Grundplatte ausgebildet sind. Die Führungsnuten können auch aus mehreren entsprechend ausgestaltete Platten aufgebaut werden.

Die Bewegung der Widerlager zur Achse hin und von dieser weg, erfolgt vorzugsweise elektromotorisch. Hierzu ist insbesondere ein Schrittmotor geeignet, da hierdurch eine genaue Einstellbarkeit der Verschiebung des Widerlagers von den bereits umschlungenen Stapel erzielt wird. Zwischen dem elektromotorischen Antrieb und dem Widerlager kann auch ein entsprechendes Getriebe vorgesehen sein. Es sind auch andere Möglichkeiten ins Auge zu fassen, so z. B. eine Zahnstange, welche an einem Ende mit dem Widerlager verbunden ist und mit einem entsprechenden Zahnrad eines elektromotorischen Antriebs in Eingriff bringbar ist.

Bevorzugt wird eine Weiterbildung der Vorrichtung, bei der ein jedes Widerlager mit einer Kolben-Zylinder-Einheit verbunden ist. Die Kolben-Zylinder-Einheit kann hydraulisch oder pneumatisch betrieben werden. Hierbei kann auf bekannte standardisierte Kolben-Zylinder-Einheiten zurückgegriffen werden.

Gemäß einer weiteren vorteilhaften Weiterbildung der Vorrichtung wird vorgeschlagen, die Schwenkachsen von der zentralen Achse weg gegen eine Federkraft zu verschieben. Eine solche Federkraft kann mittels einer Zug- oder einer Druckfeder oder Paarungen solcher Federn erzeugt werden. Vorzugsweise ist die Federkraft, mit der das Wiederlager an dem verschlungenen Stapel anliegt, einstellbar. Hierdurch kann eine Anpassung der Vorrichtung an die Form und die Ausgangswerkstoffe des Wabenkörpers erfolgen. Bevorzugt weist die Federkraft einen degressiven Verlauf auf. Dem liegt die Überlegung zugrunde, daß die Kraft, mit der das Wiederlager an dem Stapel anliegt, aufgrund des größeren Biegeradiuses geringer sein kann als im Kern des gebogenen Stapels. Die Verwendung von Federn hat auch den Vorteil, daß es sich hierbei um standartisierte Bauteile handelt, die sicher und zuverlässig arbeiten.

Zum Schließen der Form ist jedes Formsegment mit einer Antriebseinheit verbunden, welche ein entsprechendes Formsegment um die jeweilige Schwenkachse verschwenkt. Bei dieser Antriebseinheit kann es sich um eine hydraulisch oder pneumatisch betriebene Kolben-Zylinder-Einheit handeln.

Wir nehmen nunmehr Bezug auf ein Verfahren zur Herstellung eines Wabenkörpers mit einer Vielzahl von für ein Fluid durchlässigen Kanälen aus einer Vielzahl von zumindest teilweise strukturierten Blechen. Bei diesem Verfahren wird ein Stapel Blech aus einer Mehrzahl von zumindest teilweise strukturierten Blechen geschichtet. Dieser Stapel wird in eine offene Form eingebracht. In einem zentralen Bereich des Stapels und der Form wird der Stapel von einer Umschlingungseinrichtung gehalten. Die Umschlingungseinrichtung kann gabelförmig ausgebildet sein. Der Stapel wird durch die Umschlingungseinrichtung umschlungen. Durch Verschwenken der Formsegmente gegen den Drehsinn der Umschlingungseinrichtung wird die Form geschlossen. Die Form kann geschlossen werden, wenn ein vorgegebener Umschlingungsgrad erreicht ist. Es ist nicht zwingend, daß der Stapel vollständig um sich umschlungen ist. Der Schließvorgang der Form kann bereits dann eingeleitet werden, wenn die Erstreckung des noch nicht umschlungenen Abschnitts des Stapels kleiner oder gleich ist der Länge in Umfangsrichtung des Formsegments. Wird der Schließvorgang bereits dann eingeleitet, so unterstützt ein jedes Segment den Umschlingungsvorgang, da die sich schließenden Segmente die noch nicht umschlungenen Abschnitte zur Achse hin drücken. Durch dieses Verfahren wird ein aus der EP 0 245 737 bekannter Wabenkörper hergestellt. Ein solcher Wabenkörper ist in der Fachwelt unter der Bezeichnung S-Kat geläufig.

Zur Herstellung eines Wabenkörpers, der eine Vielzahl von für ein Fluid durchlässigen Kanälen aus einer Vielzahl von zumindest teilweise strukturierten Blechen, wie er z. B. in der WO 89/03220 beschrieben ist, wird vorgeschlagen, eine Mehrzahl von Stapeln aus einer Mehrzahl von zumindest teilweise strukturierten Blechen zu schichten. Jeder Stapel wird um je eine Knicklinie gefaltet. Jeder Stapel wird in eine offene Form eingebracht, und in dieser von einer Umschlingungseinrichtung in einem Zentralbereich der Form gehalten.

Gemäß einer weiteren vorteilhaften Weiterbildung des Verfahrens wird vorgeschlagen, nachdem die Umschlingungseinrichtung den Stapel ergriffen hat, beidseits des Stapels in dem Zentralbereich jeweils ein Widerlager anzuordnen, die gegenüberliegend positioniert sind, zur Anlage an den Stapel gebracht. Anschließend wird der Stapel gegensinnig um sich geschlungen. Während des Umschlingungsvorganges bewegt sich jedes Widerlager radial aus dem Zentralbereich heraus, wobei die Widerlager stets an dem Stapel anliegen. Ist der Umschliegungsvorgang beendet, so werden die Formsegmente um ihre jeweilige Schwenkachse verschwenkt, wodurch die Form geschlossen wird.

Weitere Vorteile und Merkmale der erfindungsgemäßen Vorrichtungen und der Verfahren werden anhand von vier in der Zeichnung dargestellten Ausführungsbeispielen beschrieben. Es zeigen
- Fig. 1: schematisch in der Draufsicht ein erstes Ausführungsbeispiel einer Vorrichtung mit einem Stapel,
- Fig. 2: schematisch in der Draufsicht die Vorrichtung nach Fig. 1 mit teilweise umschlungenem Stapel,
- Fig. 3: schematisch in der Draufsicht die Vorrichtung nach Fig. 1 mit geschlossener Form,
- Fig. 4: schematisch in der Draufsicht ein zweites Ausführungsbeispiel einer Vorrichtung mit drei Stapeln,
- Fig. 5: schematisch in der Draufsicht die Vorrichtung nach Fig. 4 mit teilweise umeinander geschlungenen Stapeln,
- Fig. 6: Vorrichtung nach Fig. 4 in der Draufsicht mit geschlossener Form,
- Fig. 7 bis 12: schematisch in der Draufsicht eine dritte Ausführungsform einer Vorrichtung in unterschiedlichen Arbeitsstadien und
- Fig. 13 bis 19: schematisch in der Draufsicht ein viertes Ausführungsbeispiel einer Vorrichtung.

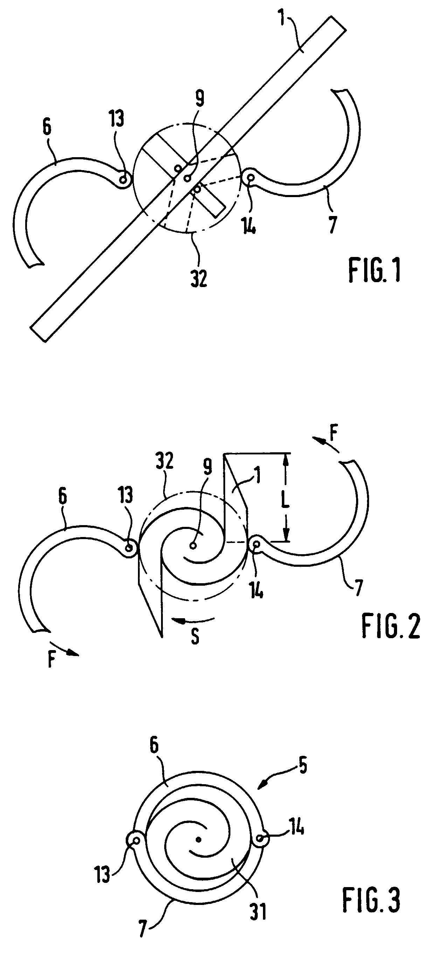

In den Fig. 1 bis 3 ist ein erstes Ausführungsbeispiel einer Vorrichtung zum Herstellen eines Wabenkörpers aus einem Stapel 1 dargestellt. Der Stapel 1 besteht aus einer Vielzahl von zumindest teilweise strukturierten Blechen, welche in den Fig. 1 bis 3 nicht dargestellt sind. Die zumindest teilweise strukturierten Bleche bilden im fertigen Wabenkörper eine Vielzahl von für ein Fluid durchlässigen Kanälen. Die Vorrichtung umfaßt eine Form 5, die aus zwei Formsegmenten 6, 7 besteht. Jedes Formsegment 6, 7 ist um jeweils eine Schwenkachse 13, 14 verschwenkbar. Die Enden eines jeden Formsegments 6, 7 ist so ausgebildet, daß die geschlossene Form einen nahezu zusammenhängenden Linienzug bildet. In dem dargestellten Ausführungsbeispiel weist der Wabenkörper 31 einen kreisförmigen Querschnitt auf. Die zwei Formsegmente 6, 7 sind diametral auf der Umhüllenden 32 ausgebildet.

Der Stapel 1 wird in die offene Form 5 eingebracht und dort von einer nicht dargestellten Umschlingungseinrichtung festgehalten. Die Umschlingungseinrichtung ist gabelförmig ausgebildet und um eine senkrecht auf der Zeichnungsebene stehenden Achse 9 drehbar. Der Drehsinn der Umschlingungseinrichtung um die Achse 9 ist mit S bezeichnet. Aus der Fig. 2 ist ersichtlich, daß der Stapel 1 teilweise verschlungen ist. Der noch nicht umschlungene Teil des Stapels 1 weist eine Länge L auf, welche dem halben Umlang der Einhüllenden 32 entspricht. In diesem Verfahrensstadium können die Formsegmente 6, 7 in Pfeilrichtungen F um die jeweiligen Schwenkachsen 13, 14 verschwenkt werden, um so die Form 5 zu schließen. Hierbei drücken die Formsegmente 6, 7 den noch nicht umschlungenen Abschnitt des Stapels 1 an den Kern des Stapels.

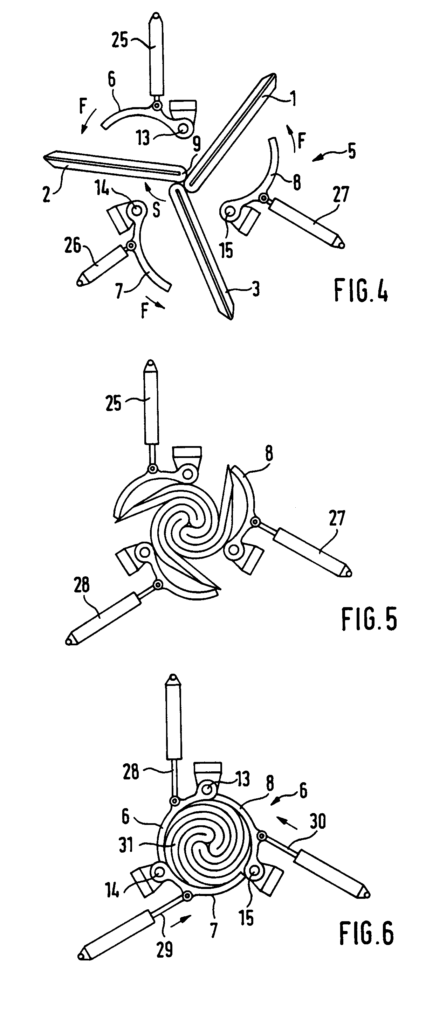

In den Fig. 4 bis 6 ist ein zweites Ausführungsbeispiel einer Vorrichtung zum Herstellen eines Wabenkörpers aus drei Stapeln 1, 2 und 3. Die Stapel 1, 2 und 3 sind symmetrisch um die Achse 9 angeordnet. Eine Umschlingungseinrichtung, welche einen jeden Stapel 1, 2 und 3 festhält und im Drehsinn S verdreht, ist der besseren Übersichtlichkeit wegen nicht dargestellt. Bei der Umschlingungseinrichtung kann es sich, wie bereits ausgeführt, um eine gabelförmige Einrichtung handeln. Die Form 5 umfaßt drei Formsegmente 6, 7 und 8. Jedes Formsegment 6, 7 und 8 ist kreissektorförmig ausgebildet. Jedes Formsegment 6, 7 und 8 ist jeweils um eine Achse 13, 14 und 15 gegen den Drehsinn S der Umschlingungseinrichtung verschwenkbar. Zum Verschwenken eines jeden Formsegments 6, 7 und 8 ist jeweils eine Antriebseinheit 25, 26, 27 vorgesehen. Bei den Antriebseinheiten 25, 26 und 27 handelt es sich um jeweils eine Kolben-Zylinder-Einheit. Die Kolbenstange 28, 29, 30 sind mit dem Formsegment 6, 7 bzw. 8 verbunden. Die Verbindung ist schwenkbar ausgebildet. Jede Antriebseinheit 25, 26, 27 ist ortsfest angeordnet.

Durch entsprechenden Druckaufbau innerhalb der Zylinder-Kolben-Einheit 25, 26 bzw. 28 wird die jeweilige Kolbenstange 28, 29 und 30 herausgefahren, wodurch jedes Segment 6, 7 bzw. 8 um die Schwenkachse 13, 14 bzw. 15 verschwenkt und die Form 5 geschlossen wird. Der verschlossene Zustand der Form ist in der Fig. 6 dargestellt.

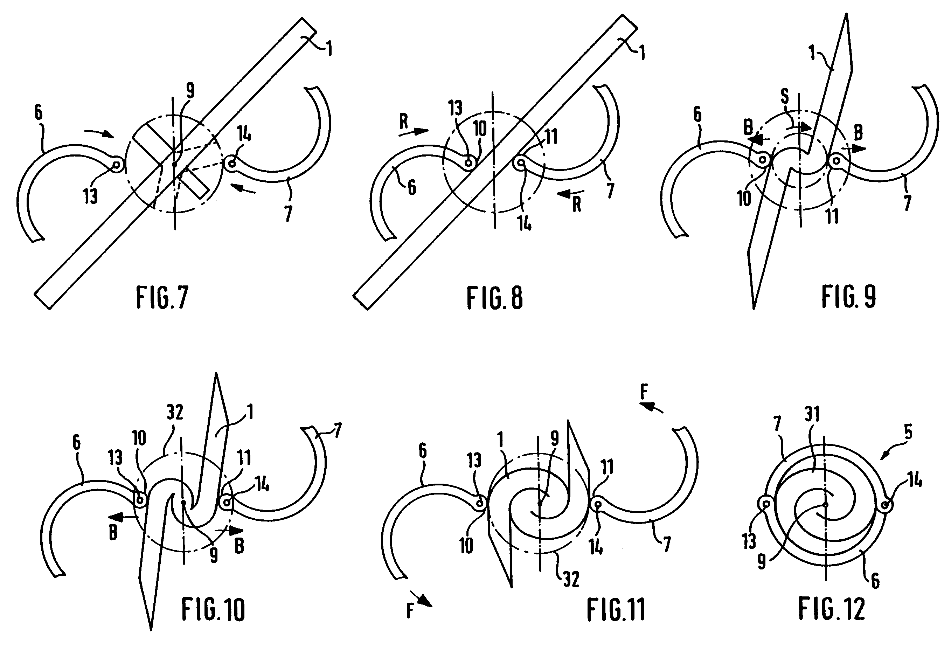

Wir nehmen nunmehr Bezug auf die Beschreibung des dritten Ausführungsbeispiels, welches in den Fig. 7 bis 12 dargestellt ist. Die Vorrichtung zum Herstellen eines Wabenkörpers aus einem Stapel 1 weist zwei Formsegmente 6, 7 auf, die um die Schwenkachsen 13, 14 jeweils verschwenkbar sind. Jedes Segment 6, 7 ist radial zur Achse 9 einer Umschlingungseinrichtung verfahrbar. In der Fig. 7 ist die Anordnung eines Stapels in der offenen Form 5 dargestellt. Nachdem der Stapel in der Form angeordnet wurde und von einer nicht dargestellten Umschlingungseinrichtung ergriffen wurde, werden die Formsegmente 6, 7 radial einwärts in Richtung der Pfeile R zum Stapel 1 hin verfahren. Jedes Formsegment 6, 7 kommt zur Anlage mit einem seinem Ende. An diesem Ende ist jeweils die Schwenkachse 13 bzw. 14 ausgebildet. Das Ende des Formsegmentes, welches an dem Stapel 1 anliegt, bildet ein Widerlager 10, 11. Während des Verschlingens des Stapels 1 in der Drehsinnrichtung S werden die Formsegmente 6, 7 radial auswärts in Richtung B verschoben, wobei die Widerlager 10, 11 stets am Stapel anliegen. Dies ist insbesondere aus den Fig. 9, 10 und 11 ersichtlich. Nachdem der Umschlingungsvorgang weitgehend beendet ist, werden die Formsegmente 6, 7 um ihre jeweilige Schwenkachse 13, 14 verschwenkt und die Form 5 verschlossen. Die Fig. 11 und 12 entsprechen den Fig. 2 und 3. Auf die Beschreibung dieser Figuren wird voll inhaltlich Bezug genommen.

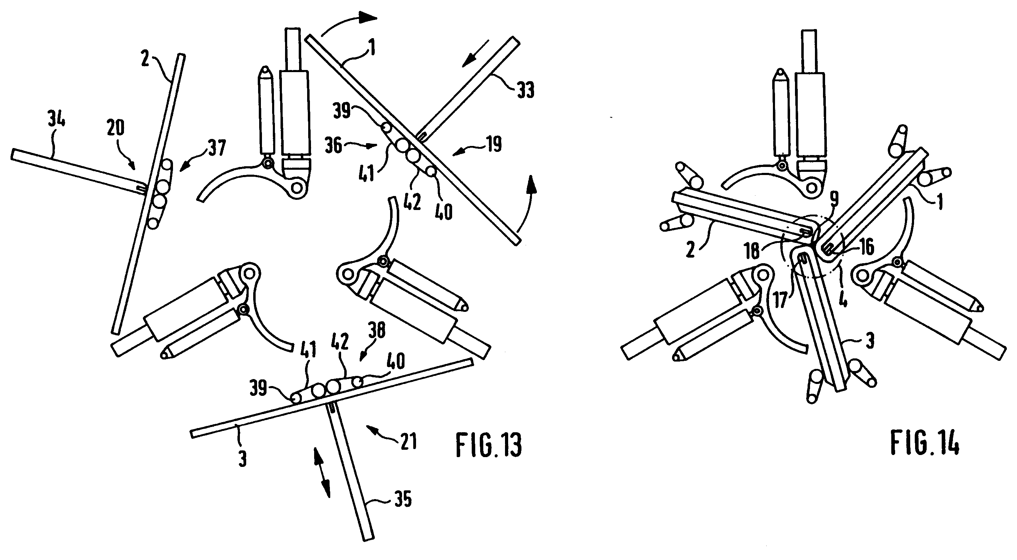

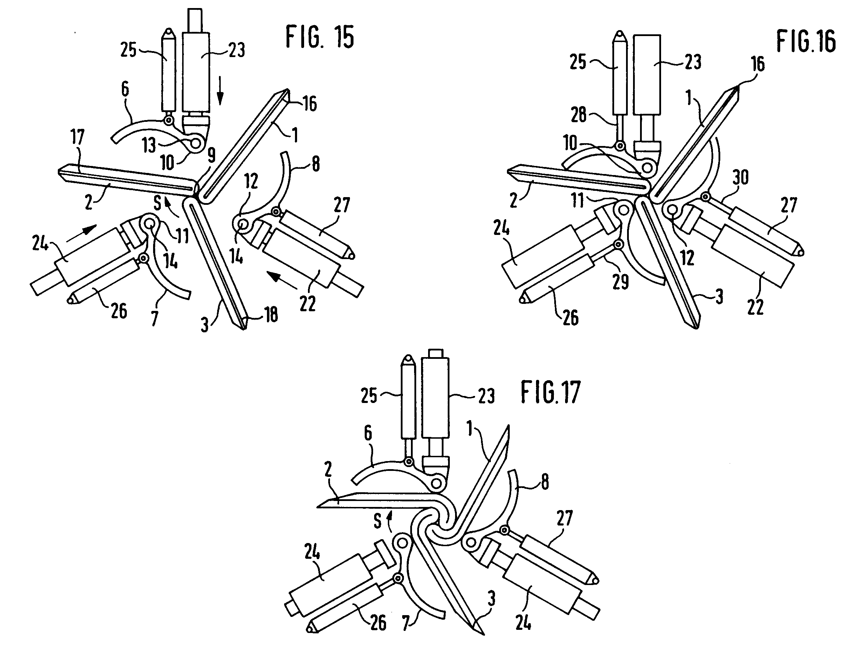

Zur Herstellung eines Wabenkörpers mit einer Vielzahl von für ein Fluid durchlässigen Kanälen, insbesondere Katalysator-Tragerkörper, aus einer Vielzahl von zumindest teilweise strukturierten Blechen, der drei Stapel 1, 2 und 3 von Blechen enthält, wobei die drei Stapel 1, 2 und 3 je um je eine zugehörige Knicklinie 16, 17 und 18 im Zentralbereich 4 des Wabenkörpers gefaltet und im gefalteten Zustand gleichsinnig umeinander und um den Zentralbereich 4 mit den Knicklinien 16, 17 und 18 verschlungen sind, wird eine Vorrichtung vorgeschlagen, wie sie in den Fig. 13 bis 19 dargestellt ist. Die Vorrichtung umfaßt drei Falteinheiten 19, 20 und 21. Jede Falteinheit 19, 20, 21 weist einen Faltdorn 33, 34 und 35 auf. Der Faltdorn 33, 34 und 35 ist entlang einer geraden Linie hin und her beweglich. Jede Falteinheit 19, 20, 21 weist eine zweiteilige Schleuse 36, 37 und 38 auf. Die Schleusen 36, 37 und 38 weisen jeweils zwei um die Achsen 39, 40 verschwenkbare Tore 41, 42 auf. Die Verschwenkbarkeit erfolgt gegen eine Kraft. Zum Falten eines Stapels 1, 2 und 3 wird der Stapel parallel zur Schleuse 36, 37 bzw. 38 angeordnet. Symmetrisch zwischen den Schleusentoren 41, 42 ist der Dorn 33 angeordnet. Durch eine Kraftausübung des Dorns 33 auf den Stapel 1 und durch die Verschwenkbarkeit der Tore 41, 42 wird der Stapel 1 um die Knicklinie 16 gefaltet. Der gefaltete Zustand ist in der Fig. 14 dargestellt. Mit dem Faltvorgang werden die Stapel 1, 2 und 3 in den zentralen Bereich 4 der Vorrichtung eingeführt. Die Stapel 1, 2 und 3 sind symmetrisch bezüglich der Achse 9 angeordnet. Nach dem erfolgten Falten werden die Dorne 33, 34, 35 aus dem jeweiligen Stapel herausgefahren. In den folgenden Fig. 15 bis 19 sind die Knickeinrichtungen 19, 20 und 21 der Übersichtlichkeit wegen nicht mehr dargestellt.

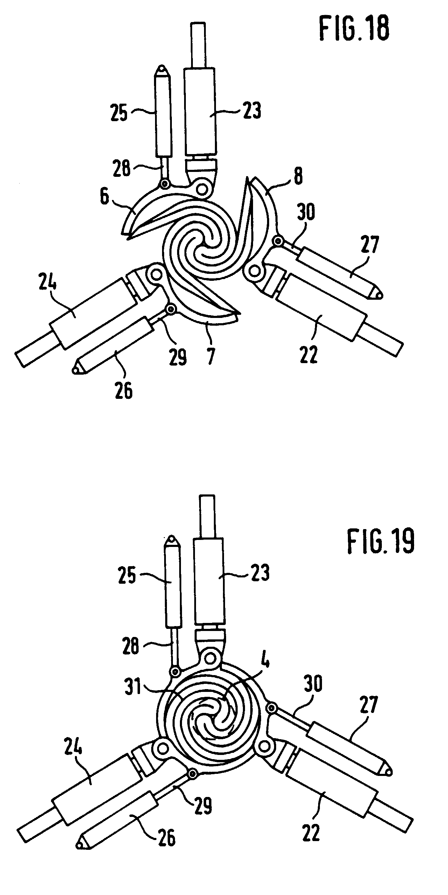

Eine nicht dargestellte Umschlingungseinrichtung hat einen jeden Stapel 1, 2 und 3 ergriffen. Die einzelnen Formsegmente 6, 7 und 8 werden mittels einer Zylinder-Kolben-Einheit 22, 23 und 24 radial einwärts zur Achse 9 hin verschoben. Der Verschiebevorgang erfolgt solange, bis die an einem Ende eines jeden Formsegments 6, 7 und 8 ausgebildeten Widerlager 10, 11 und 12 an dem betreffenden Stapel 1, 2 und 3 anliegen, wie dies in der Fig. 16 dargestellt ist. Liegen die Widerlager an den Stapel 1, 2 und 3 an, so kann der Umschlingungsvorgang eingeleitet werden. Einen Zustand der Umschlingung der einzelnen Stapel 1, 2 und 3 ist in der Fig. 17 dargestellt. Zum Verschließen der Form 5 sind die Formsegmente 6, 7 und 8 um jeweils eine Schwenkachse 13, 14 verschwenkbar. Die Fig. 18 und 19 entsprechen den Fig. 5 und 6, auf die voll inhaltlich Bezug genommen wird.

Die in den Ausführungsbeispielen beschriebenen Wabenkörper weisen einen kreisförmigen Querschnitt auf. Im Rahmen der Erfindung können auch solche Wabenkörper hergestellt werden, welche nicht einen kreisförmigen Querschnitt aufweisen. Hierbei kann es sich z. B. auch um Wabenkörper handeln, die einen elyptischen, teilkreisförmigen oder epitrochoidalen Querschnitt aufweisen.

### BEZUGSZEICHENLISTE

- 1: Stapel
- 2: Stapel
- 3: Stapel
- 4: Berich
- 5: Form
- 6: Formsegment
- 7: Formsegment
- 8: Formsegment
- 9: zentrale Achse
- 10: Widerlager
- 11: Widerlager
- 12: Widerlager
- 13: Schwenkachse
- 14: Schwenkachse
- 15: Schwenkachse
- 16: Knicklinie
- 17: Knicklinie
- 18: Knicklinie
- 19: Falteinheit
- 20: Falteinheit
- 21: Falteinheit
- 22: Zylinder-Kolben-Einheit
- 23: Zylinder-Kolben-Einheit
- 24: Zylinder-Kolben-Einheit
- 25: Antriebseinheit
- 26: Antriebseinheit
- 27: Antriebseinheit
- 28: Kolbenstange
- 29: Kolbenstange
- 30: Kolbenstange
- 31: Wabenkörper
- 32: Einhüllende
- 33: Faltdorn
- 34: Faltdorn
- 35: Faltdorn
- 36: Schleuse
- 37: Schleuse
- 38: Schleuse
- 39: Achse
- 40: Achse
- 41: Schleusentor
- 42: Schleusentor

## Patentansprüche

1. Vorrichtung mm Herstellen eines Wabenkörpers, insbesondere eines Katalysator-Tragerkörpers, aus wenigstens einem Stapel (1, 2, 3) aus einer Vielzahl von zumindest teilweise strukturierten Blechlagen, die eine Vielzahl von für ein Fluid durchlässigen Kanälen bilden, wobei die Vorrichtung eine um eine zentrale Achse (9) in einem Drehsinn (S) verdrehbare, an jedem Stapel (1, 2, 3) angreifende gabelartige Umschlingungseinrichtung aufweist und Formsegmente (6, 7, 8), die sich zu einer der Außenform des herzustellenden Wabenkörpers entsprechenden Form (5) schließen können,
**dadurch gekennzeichnet**, daß wenigstens zwei Formsegmente (6, 7, 8) vorgesehen sind, wobei ein jedes Formsegment (6, 7, 8) jeweils um eine Schwenkachse (13, 14, 15), die jeweils parallel zur zentralen Achse (9) verläuft, gegen den Drehsinn (S) der Umschlingungseinrichtung verschwenkbar ist.

2. Vorrichtung nach Anspruch 1, dadurch gekennzeichnet, daß die Schwenkachse (13, 14, 15) jedes Formsegmentes (6, 7, 8) nahe der äußeren Umrandungslinie des herzustellenden Wabenkörpers liegt, vorzugsweise im Endbereich jedes Formsegmentes (6, 7, 8).

3. Vorrichtung nach Anspruch 1 oder 2, dadurch gekennzeichnet, daß zum Wickeln eines Wabenkörpers aus mehr als zwei Stapeln eine der Anzahl der Stapel (1, 2, 3) entsprechende Anzahl von Formsegmenten (6, 7, 8) vorgesehen ist.

4. Vorrichtung nach Anspruch 1, 2 oder 3 dadurch gekennzeichnet, daß die Schwenkachsen (13, 14, 15) äquidistant zueinander auf einer Umhüllenden des fertigen Wabenkörpers angeordnet sind.

5. Vorrichtung nach einem der Ansprüche 1 bis 4, dadurch gekennzeichnet, daß jede Schwenkachse (13, 14, 15) an einem jeweils ein Widerlager (10, 11, 12) bildenden Ende eines Formsegmentes (6, 7, 8) angeordnet ist und jedes Widerlager (10, 11, 12) zur zentralen Achse (9) hin und von dieser weg bewegbar ist.

6. Vorrichtung nach Anspruch 5, dadurch gekennzeichnet, daß die Vorrichtung eine Grundplatte mit sich radial zum Zentrum erstreckenden Führungsnuten aufweist und in jeweils einer Führungsnut ein eine Schwenkachse bildender Bolzen gleitend geführt wird.

7. Vorrichtung nach Anspruch 6, dadurch gekennzeichnet, daß jede Führungsnut einen polygonalen, vorzugsweise einen T-förmigen oder schwalbenschwanzförmigen, Querschnitt aufweist.

8. Vorrichtung nach einem der Ansprüche 5 bis 7, dadurch gekennzeichnet, daß jede Schwenkachse (13, 14, 15) zur zentralen Achse (9) und von dieser weg elektromotorisch bewegbar ist.

9. Vorrichtung nach Anspruch 8, dadurch gekennzeichnet, daß jede Schwenkachse (13, 14, 15) mit einem Schrittmotor verbunden ist.

10. Vorrichtung nach einem der Ansprüche 5 bis 7, dadurch gekennzeichnet, daß jede Schwenkachse (13, 14, 15) zur Achse (9) hin und von dieser weg mittels einer Kolben-Zylinder-Einheit (22, 23, 24) bewegbar ist.

11. Vorrichtung nach Anspruch 10, dadurch gekennzeichnet, daß jede Kolben-Zylinder-Einheit (22, 23, 24) hydraulisch oder pneumatisch betrieben wird.

12. Vorrichtung nach einem der Ansprüche 5 bis 7, dadurch gekennzeichnet, daß jede Schwenkachse (13, 14, 15) von der zentralen Achse (9) weg gegen eine Federkraft bewegbar ist.

13. Vorrichtung nach Anspruch 12, dadurch gekennzeichnet, daß die Federkraft, gegen welche jede Schwenkachse (13, 14, 15) von der zentralen Achse (9) weg bewegbar ist, einstellbar ist.

14. Vorrichtung nach Anspruch 12 oder 13, dadurch gekennzeichnet, daß die Federkennlinie einen degressiven Verlauf aufweist.

15. Vorrichtung nach Anspruch 12, 13 oder 14, dadurch gekennzeichnet, daß jede Schwenkachse (13, 14, 15) von der zentralen Achse (9) gegen die Federkraft wenigstens einer Zugfeder weg verschieblich ist.

16. Vorrichtung nach einem der Ansprüche 12 bis 15, dadurch gekennzeichnet, daß jede Schwenkachse (13, 14, 15) von der zentralen Achse (9) gegen eine Druckfeder weg verschieblich ist.

17. Vorrichtung nach einem der Ansprüche 1 bis 16, dadurch gekennzeichnet, jedes Formsegment (6, 7, 8) zum Verschwenken um die jeweilige Schwenkachse (13, 14, 15) mit einer Antriebseinheit (25, 26, 27) verbunden ist.

18. Vorrichtung nach Anspruch 17, dadurch gekennzeichnet, daß die Antriebseinheit (25, 26, 27) eine hydraulisch oder pneumatisch betriebene Kolben-Zylinder-Einheit ist.

19. Verfahren zur Herstellung eines Wabenkörpers mit einer Vielzahl von für ein Fluid durchlässigen Kanälen aus einer Vielzahl von zumindest teilweise strukturierten Blechlagen, bei dem
- ein Stapel (1) aus einer Mehrzahl von zumindest teilweise strukturierten Blechlagen geschichtet wird,
- der Stapel (1) in eine offene, aus der Außenform des herzustellenden Wabenkörpers entsprechenden Formsegmenten (6, 7, 8) gebildete Form (5) eingebracht und in dieser von einer Verschlingungseinrichtung in einem Zentralbereich gehalten wird,
- der Stapel (1) mit einem Drehsinn (S) umschlungen wird und
- die Form (5) durch Verschwenken der Formsegmente (6, 7, 8) gegen den Drehsinn (S) der Umschlingungseinrichtung geschlossen wird, wenn ein vorgegebener Umschlingungsgrad erreicht ist.

20. Verfahren zur Herstellung eines Wabenkörpers mit einer Vielzahl von für ein Fluid durchlässigen Kanälen aus einer Vielzahl von zumindest teilweise strukturierten Blechlagen, bei dem
- eine Mehrzahl von Stapeln (1, 2, 3) aus einer Mehrzahl von zumindest teilweise strukturierten Blechlagen geschichtet wird,
- jeder Stapel (1, 2, 3) um je eine Knicklinie (16, 17, 18) gefaltet wird,
- die Stapel (1, 2, 3) in eine offene, aus der Außenform des herzustellenden Wabenkörpers entsprechenden Formsegmenten (6, 7, 8) gebildete Form (5) eingebracht und in dieser von einer Umschlingungseinrichtung in einem Zentralbereich gehalten werden,
- die Stapel (1, 2, 3) in einem Drehsinn (S) umeinandergeschlungen werden,
- die Form (5) durch verschwenken der Formsegmente (6, 7, 8) gegen den Drehsinn (S) der Umschlingungseinrichtung geschlossen wird, wenn ein vorgegebener Umschlingungsgrad erreicht ist.

21. Verfahren nach Anspruch 19 oder 20, bei dem an jeden Stapel (1, 2, 3) in dem Zentralbereich jeweils ein Widerlager (10, 11, 12) zur Anlage gebracht und während des Umeinanderschlingens jedes Widerlager (10, 11, 12) radial aus dem Zentralbereich (4) herausbewegt wird, wobei dieses stets an dem Stapel (1, 2, 3) anliegt.

## Claims

1. Device for manufacturing a honeycomb body, in particular a catalytic converter supporting body, from at least one stack (1, 2, 3) of a large number of at least partly structured sheet metal layers, which form a large number of channels which a fluid can pass through, wherein the device is provided with a fork-like looping means rotatable in one direction (S) of rotation about a central axis 9 and engaging with each stack (1, 2, 3), and shaping segments (6, 7, 8) which can lock into a shape corresponding to the external shape of the honeycomb body to be manufactured,
characterised in that at least two shaping segments (6, 7, 8) are provided, wherein each shaping segment (6, 7, 8) respectively is pivotable contrary to the direction of rotation (S), about a pivoting axis (13, 14, 15) which respectively runs parallel to the central axis (9).

2. Device according to claim 1, characterised in that the pivoting axle (13, 14, 15) of each shaping segment (6, 7, 8) lies close to the line of the outer boundary edge of the honeycomb body to be manufactured, preferably in the end region of each shaping segment (6, 7, 8).

3. Device according to claim 1 or 2, characterised in that for winding a honeycomb body from more than two stacks, a number of shaping segments (6, 7, 8) corresponding to the number of stacks (1, 2, 3) is provided.

4. Device according to claim 1, 2 or 3, characterised in that the pivoting axles (13, 14, 15) are arranged equidistantly on an envelope of the completed honeycomb body.

5. Device according to one of claims 1 to 4, characterised in that each pivoting axle (13, 14, 15) is arranged on an end, forming respectively an abutment (10, 11, 12), of a shaping segment (6, 7, 8), and each abutment (10, 11, 12) is moveable towards the central axis (9) and away from it.

6. Device according to claim 5, characterised in that the device is provided with a base plate with guide grooves extending radially towards the centre, and a bolt forming a pivoting axle is inserted in a sliding manner into each guide groove.

7. Device according to claim 6, characterised in that each guide groove has a polygonal, preferably a T-shaped or swallowtail shaped, cross-section.

8. Device according to one of claims 5 to 7, characterised in that each pivoting axle (13, 14, 15) is moveable by an electric motor towards the central axis (9) and away from it.

9. Device according to claim 8, characterised in that each pivoting axle (13, 14, 15) is connected to a stepping motor.

10. Device according to one of claims 5 to 7, characterised in that each pivoting axle (13, 14, 15) is moveable by a piston-cylinder unit (22, 23, 24) towards the central axis (9) and away from it.

11. Device according to claim 10, characterised in that each piston-cylinder unit (22, 23, 24) is driven hydraulically or pneumatically.

12. Device according to one of claims 5 to 7, characterised in that each pivoting axle (13, 14, 15) is moveable away from the central axis (9) counter to a spring force.

13. Device according to claim 12, characterised in that the spring force counter to which each pivoting axis (13, 14, 15) is moveable away from the central axis (9) is adjustable.

14. Device according to claim 12 or 13, characterised in that the spring characteristic has a degressive development.

15. Device according to claim 12, 13 or 14, characterised in that each pivoting axle (13, 14, 15) can be displaced from the central axis (9) counter to the spring force of at least one tension spring.

16. Device according to one of claims 12 to 15, characterised in that each pivoting axis (13, 14, 15) can be displaced from the central axis (9) counter to a compression spring.

17. Device according to one of claims 1 to 16, characterised in that each shaping segment (6, 7, 8) is connected to a drive unit (25, 26, 27) in order to pivot about the respective pivoting axle (13, 14, 15).

18. Device according to claim 17, characterised in that the drive unit (25, 26, 27) is a hydraulically or pneumatically driven piston-cylinder unit.

19. Method for manufacturing a honeycomb body with a large number of channels which a fluid can flow through from a large number of at least partly structured sheet metal layers, in which
- a stack (1) is layered from a plurality of at least partly structured sheet metal layers,
- the stack (1) is placed in an open mould (5) formed by shaping segments (6, 7, 8), corresponding to the outside shape of the honeycomb body to be manufactured, and is retained therein in a central area by a looping means,
- the stack (1) is looped using one direction of rotation (S), and
- the mould (5) is closed by pivoting the shaping segments (6, 7, 8) counter to the direction of rotation (S) of the looping means, once a predetermined degree of looping is obtained.

20. Method for manufacturing a honeycomb body with a large number of channels which a fluid can flow through made from a large number of at least partly structured sheet metal layers, in which
- a plurality of stacks (1, 2, 3) are layered from a plurality of at least partly structured sheet metal layers,
- each stack (1, 2, 3) is folded about a bending line (16, 17, 18),
- the stacks (1, 2, 3) are placed in an open mould (5) formed by the shaping segments (6, 7, 8), corresponding to the outside shape of the honeycomb body to be manufactured, and are retained therein in a central area by a looping means,
- the stacks (1, 2, 3) are looped around one another using one direction of rotation (S), and
- the mould (5) is closed by pivoting the shaping segments (6, 7, 8) counter to the direction of rotation (S) of the looping means, once a predetermined degree of looping is obtained.

21. Method according to claim 19 or 20, in which an abutment (10, 11, 12) is brought into contact with each stack (1, 2, 3) in the central area and during the looping around one another, each abutment (10, 11, 12) is moved radially away out of the central area (4), wherein it is in continuous contact with the stacks (1, 2, 3).

## Revendications

1. Dispositif destiné à la fabrication d'un corps alvéolaire, notamment d'un corps de support de catalyseur, constitué d'au moins une pile (1, 2, 3) d'une pluralité de couches de tôles au moins partiellement structurées qui forment une pluralité de canaux pouvant être traversés par un fluide, le dispositif comportant un dispositif d'enroulement de type fourche pouvant tourner autour d'un axe central (9) dans un sens de rotation (S), lequel saisit chaque pile (1, 2, 3), et des segments (6, 7, 8) de gabarit pouvant être fermés en un gabarit (5) correspondant à la forme extérieure du corps alvéolaire à fabriquer,
caractérisé en ce qu'on prévoit au moins deux segments (6, 7, 8) de gabarit, chaque segment (6, 7, 8) de gabarit pouvant être pivoté dans le sens contraire au sens de rotation (S) du dispositif d'enroulement autour d'un axe de pivotement (13, 14, 15), qui s'étend parallèlement à l'axe central (9).

2. Dispositif selon la revendication 1, caractérisé en ce que l'axe de pivotement (13, 14, 15) de chaque segment (6, 7, 8) de gabarit est situé à proximité de la ligne de contour extérieur du corps alvéolaire à fabriquer, de préférence dans la zone d'extrémité de chaque segment (6, 7, 8) de gabarit.

3. Dispositif selon la revendication 1 ou 2, caractérisé en ce que pour l'enroulement d'un corps alvéolaire constitué de plus de deux piles, on prévoit un nombre de segments (6, 7, 8) de gabarit correspondant au nombre de piles (1, 2, 3).

4. Dispositif selon la revendication 1, 2 ou 3, caractérisé en ce que les axes de pivotement (13, 14, 15) sont disposés à égale distance les uns des autres sur une courbe enveloppe du corps alvéolaire fini.

5. Dispositif selon l'une des revendications 1 à 4, caractérisé en ce que chaque axe de pivotement (13, 14, 15) est disposé sur une extrémité d'un segment (6, 7, 8) de gabarit formant à chaque fois une butée (10, 11, 12), et en ce que chaque butée (10, 11, 12) peut être déplacée vers l'axe central (9) et éloignée de ce dernier.

6. Dispositif selon la revendication 5, caractérisé en ce que le dispositif comporte une plaque de base avec des rainures de guidage s'étendant radialement vers le centre, et en ce qu'un axe formant un axe de pivotement est guidé de façon coulissante dans chaque rainure de guidage.

7. Dispositif selon la revendication 6, caractérisé en ce que chaque rainure de guidage a une section transversale polygonale, de préférence en forme de T ou de queue d'aronde.

8. Dispositif selon l'une des revendications 5 à 7, caractérisé en ce que chaque axe de pivotement (13, 14, 15) peut être déplacé vers l'axe central (9) et éloigné de ce dernier par un moteur électrique.

9. Dispositif selon la revendication 8, caractérisé en ce que chaque axe de pivotement (13, 14, 15) est relié à un moteur pas à pas.

10. Dispositif selon l'une des revendications 5 à 7, caractérisé en ce que chaque axe de pivotement (13, 14, 15) peut être déplacé vers l'axe central (9) et éloigné de ce dernier au moyen d'un vérin (22, 23, 24).

11. Dispositif selon la revendication 10, caractérisé en ce que chaque vérin (22, 23, 24) est actionné par voie hydraulique ou pneumatique.

12. Dispositif selon l'une des revendications 5 à 7, caractérisé en ce que chaque axe de pivotement (13, 14, 15) peut être éloigné de l'axe central (9) en s'opposant à une force de ressort.

13. Dispositif selon la revendication 12, caractérisé en ce que la force de ressort contre laquelle chaque axe de pivotement (13, 14, 15) peut être éloigné de l'axe central (9) est réglable.

14. Dispositif selon la revendication 12 ou 13, caractérisé en ce que la courbe caractéristique de ressort a un tracé dégressif.

15. Dispositif selon la revendication 12, 13 ou 14, caractérisé en ce que chaque axe de pivotement (13, 14, 15) peut être éloigné de l'axe central (9) en s'opposant à la force d'au moins un ressort de traction.

16. Dispositif selon l'une des revendications 12 à 15, caractérisé en ce que chaque axe de pivotement (13, 14, 15) peut être éloigné de l'axe central (9) en s'opposant à la force d'un ressort de compression.

17. Dispositif selon l'une quelconque des revendications 1 à 16, caractérisé en ce que, pour le pivotement autour de l'axe de pivotement (13, 14, 15) respectif, chaque segment (6, 7, 8) de gabarit est relié à une unité d'entraînement (25, 26, 27).

18. Dispositif selon la revendication 17, caractérisé en ce que l'unité d'entraînement (25, 26, 27) est un vérin actionné par voie hydraulique ou pneumatique.

19. Procédé destiné à la fabrication d'un corps alvéolaire comportant une pluralité de canaux pouvant être traversés par un fluide, constitué d'une pluralité de couches de tôles au moins partiellement structurées, selon lequel
- une pile (1) constituée de plusieurs couches de tôles au moins partiellement structurées est empilée,
- la pile (1) est introduite dans un gabarit ouvert (5) constitué de segments (6, 7, 8) de gabarit correspondant à la forme extérieure du corps alvéolaire à fabriquer, et est retenue dans celui-ci dans une zone centrale par un dispositif d'enroulement,
- la pile (1) est enroulée suivant un sens de rotation (S), et
- le gabarit (5) est fermé par un pivotement des segments (6, 7, 8) de gabarit dans le sens contraire au sens de rotation (S) du dispositif d'enroulement lorsqu'un degré d'enroulement prédéterminé est atteint.

20. Procédé destiné à la fabrication d'un corps alvéolaire comportant une pluralité de canaux pouvant être traversés par un fluide, constitué d'une pluralité de couches de tôles au moins partiellement structurées, selon lequel
- plusieurs piles (1, 2, 3) constituées de plusieurs couches de tôles au moins partiellement structurées sont empilées,
- chaque pile (1, 2, 3) est repliée autour d'une ligne d'inflexion respective (16, 17, 18),
- les piles (1, 2, 3) sont introduites dans un gabarit ouvert (5) constitué de segments (6, 7, 8) de gabarit correspondant à la forme extérieure du corps alvéolaire à fabriquer, et sont retenues dans celui-ci dans une zone centrale par un dispositif d'enroulement,
- les piles (1, 2, 3) sont enroulées les unes autour des autres suivant un sens de rotation (S), et
- le gabarit (5) est fermé par un pivotement des segments (6, 7, 8) de gabarit dans le sens contraire au sens de rotation (S) du dispositif d'enroulement lorsqu'un degré d'enroulement prédéterminé est atteint.

21. Procédé selon la revendication 19 ou 20, selon lequel une butée (10, 11, 12) est mise en application contre chaque pile (1, 2, 3) dans la zone centrale, et chaque butée (10, 11, 12) est déplacée radialement hors de la zone centrale (4) pendant l'enroulement tout en restant appliquée en permanence contre la pile (1, 2, 3).
